# EUROPÄISCHE PATENTANMELDUNG

(11) **EP 0 990 579 A2**
(43) Veröffentlichungstag der Anmeldung: **05.04.2000**
(21) Anmeldenummer: 99118742.8
(22) Anmeldetag: 22.09.1999
(51) Int. Cl.: B62J 6/04

(54) **Fahrzeugleuchte**

(30) Priorität: 29.09.1998 DE 19844715
(71) Anmelder: FER Fahrzeugelektrik GmbH, 99819 Eisenach (DE)
(72) Erfinder: Werner, Hermann, 99817 Eisenach (DE)
(74) Vertreter: Strasser, Wolfgang, Dipl.-Phys

(57) **Zusammenfassung**

Bei einer Fahrzeugleuchte, insbesondere Fahrradschlußleuchte mit einer Leuchtdiode (7), die so angeordnet ist, daß die zentrale Achse (9) des Raumwinkels, in den sie Licht abstrahlt, im Betrieb in etwa horizontal gerichtet ist, ist vorgesehen, daß eine Leuchtdiode verwendet wird, die Licht in einen Raumwinkel von etwa ±180° abstrahlt, und daß ein optisch aktives Element (11) die Winkelverteilung des von der Leuchtdiode in horizontaler Richtung abgestrahlten Lichts im wesentlichen unverändert läßt, das in vertikaler Richtung abgestrahlte Licht jedoch bündelt.

## Beschreibung

Die Erfindung betrifft eine Fahrzeugleuchte, insbesondere eine Fahrradschlußleuchte gemäß dem Oberbegriff von Anspruch 1.

Üblicherweise werden in Fahrzeugleuchten Glühlampen als Lichtquelle verwendet. Aufgrund ihrer begrenzten Lebensdauer und ihrer Empfindlichkeit gegenüber Erschütterungen kommen an ihrer Stelle in zunehmendem Maße Leuchtdioden zum Einsatz, die bei entsprechendem Gerätedesign eine nahezu unbegrenzte Lebensdauer aufweisen.

Es stehen Leuchtdioden mit sehr unterschiedlichen Licht-Abstrahlungswinkeln zur Verfügung. Aufgrund gesetzlicher Zulassungsvorschriften ist es erforderlich das abgestrahlte Licht vor allem in einem Bereich von ±110 ° horizontal und ±10° vertikal austreten zu lassen. Es ist üblich, zur Abdeckung dieses sehr großen horizontalen Bereichs mehrere Leuchtdioden zu verwenden, deren Abstrahlung lediglich den vertikalen Sichtbereich abdeckt. Diese Leuchtdioden werden in ihrer Hauptabstrahlrichtung horizontal so zueinander verkippt, daß sich die einzelnen Leuchtfelder ergänzen und/oder überlappen und so den erforderlichen horizontalen Sichtbarkeitsbereich ausleuchten.

Weiterhin sind Lösungen bekannt bei denen der gesamte Signalbereich zwar mit nur einer einzigen Leuchtdiode abgedeckt wird, bei denen aber in der Richtung der zentralen Längsachse des von der Leuchtdiode abgestrahlten Lichtkegels eine sehr viel höhere Lichtstärke vorhanden ist, als im restlichen Signalbereich. Die Ausbildung eines solchen "Hot Spots" ist aber ungünstig, da die Sichtbarkeit der Leuchte schon bei geringer Veränderung des Beobachtungswinkels stark variiert.

In der DE-PS 42 24 061 wird eine Fahrzeugbeleuchtungsanordnung beschrieben, bei der eine Leuchtdiode Verwendung findet, die ein das abgegebene Licht in einem sehr engen Raumwinkel bündelndes Gehäuse aufweist; die erforderliche bzw. gewünschte Verbreiterung des Signalbereichs erfolgt dann mit Hilfe von entsprechend geformten Streuelementen.

Demgegenüber liegt der Erfindung die Aufgabe zugrunde, eine Fahrzeugleuchte der eingangs genannten Art so weiterzubilden, daß sie einen einfachen Aufbau besitzt, kostengünstig herstellbar ist und die gesetzlichen Anforderungen ohne weiteres erfüllt.

Zur Lösung dieser Aufgabe sieht die Erfindung die im Anspruch 1 zusammengefaßten Merkmale vor.

Als Lichtquelle für die Fahrzeugleuchte wird also nur eine einzige Leuchtdiode verwendet, deren Abstrahlbereich von ±180° annähernd den gesamten Signalbereich in horizontaler Richtung abdeckt. Eine ringförmig um die Leuchtdiode herumgezogene Sammellinse bündelt das Licht lediglich in vertikaler Richtung. Dabei ist die Linse in mehrere horizontal verlaufende Bereiche unterteilt, die das von der Leuchtdiode einfallende Licht gezielt vertikal in bestimmte Raumwinkelbereiche verteilen. Damit entsteht ein aus allen geforderten Beobachtungswinkeln sehr homogenes Signalbild.

Vorteilhafte Ausgestaltungen und Weiterbildungen einer erfindungsgemäßen Fahrzeugleuchte sind in den Unteransprüchen niedergelegt.

Die Erfindung wird im folgenden anhand eines Ausführungsbeispiels unter Bezugnahme auf die Zeichnung beschrieben; in dieser zeigen:
- Fig.1: einen Vertikalschnitt durch eine Fahrradschlußleuchte gemäß der Erfindung,
- Fig.2: in vergrößertem Maßstab eine perspektivische Darstellung, des optisch wirksamen Elementes aus Fig.1,
- Fig.3: in verkleinertem Maßstab einen Horizontalschnitt durch das optisch wirksame Element aus Fig.2 und
- Fig.4: eine Leiterplatte, auf welcher die Leuchtdiode einer erfindungsgemäßen Fahrradschlußleuchte montiert ist.

In der folgenden Beschreibung werden die Begriffe "oben", "unten", "seitlich" sowie "horizontal" und 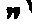 vertikal" immer in Bezug auf die Position einer erfindungsgemäßen Fahrradschlußleuchte verwendet, die diese einnimmt, wenn sie an einem auf einer horizontalen Fläche fahrenden Fahrrad montiert ist.

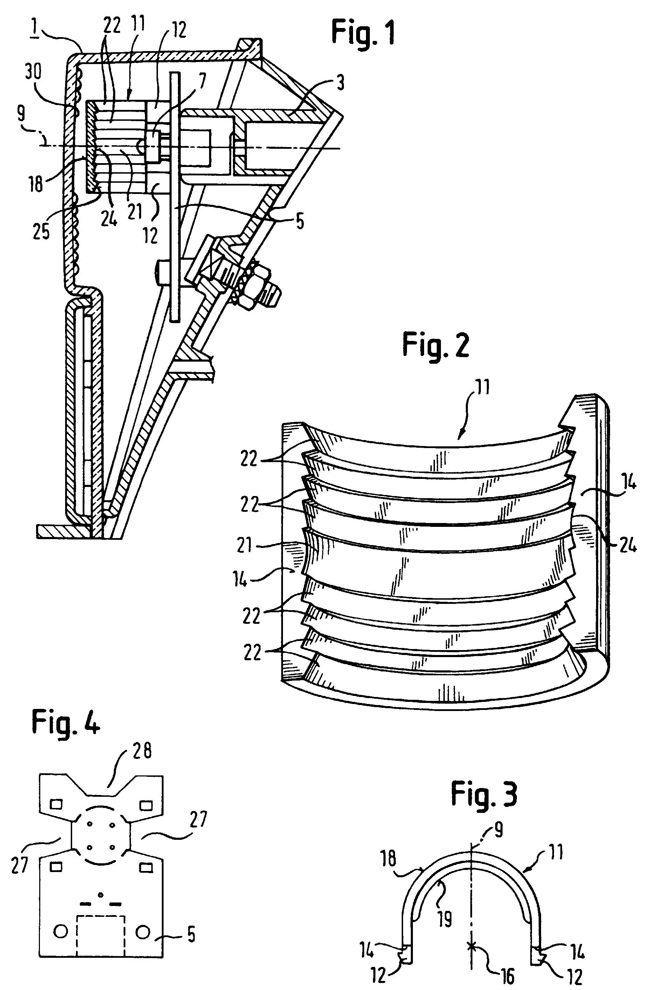

Das in Fig.1 gezeigte Gehäuse 1 einer Fahrradschlußleuchte 1 ist in herkömmlicher Weise aufgebaut, und wird daher im folgenden nicht im Einzelnen beschrieben. Im Inneren des Gehäuses 1 befindet sich ein Träger 3, auf dem eine Leiterplatte 5 so montiert ist, daß sie sich im regulären Betriebszustand im wesentlichen in senkrechter Richtung erstreckt. Die Leiterplatte 5 trägt eine Leuchtdiode 7 sowie die (nicht dargestellten) Leitbahnverbindungen, die zu deren Stromversorgung erforderlich sind. Die Leuchtdiode 7 ist so ausgerichtet, daß sich ihre zentrale Achse bzw. der Zentralstrahl 9 des Lichtes, das sie in einen sowohl in vertikaler als auch in horizontaler Richtung etwa 180° überdeckenden Raumwinkel ausstrahlt, in der regulären Betriebsstellung, in etwa in horizontaler Richtung erstreckt.

Weiterhin ist ein optisch wirksames Element 11 vorgesehen, das, wie man insbesondere der Fig.2 entnimmt, die Form eines der Länge nach geschnittenen Halbzylinders besitzt und mit in Fig.2 nicht gezeigten Befestigungselementen 12, 12 an der Leiterplatte 5 so befestigt ist, daß der Zentralstrahl 9 durch seine Mitte hindurch verläuft, es seine konkave Innenseite der Leuchtdiode 7 zuwendet und, wie in Fig.4 gezeigt, der fiktive Brennpunkt 16 der Leuchtdiode 7 in der Ebene liegt, welche die beiden vertikal verlaufenden Längskanten 14, 14 des Halbzylinders miteinander verbindet.

Unter dem "fiktiven Brennpunkt" wird dabei der im Inneren bzw. hinter der Leuchtdiode 7 liegende Punkt verstanden, von welchem das von der Leuchtdiode abgestrahlte Lichtbündel ausgehen müßte, wenn es von einer streng punktförmigen Lichtquelle käme.

Das aus einem lichdurchlässigen Material hergestellte optisch wirksame Element 11 ist in Art einer Fresnell-Linse ausgebildet, das heißt seine von der Leuchtdiode 7 abgewandte Außenseite 18 ist eine glatte Zylinderfläche, während seine der Leuchtdiode 7 zugewandte Innenseite 19 in eine Vielzahl zueinander paralleler, horizontal von Längakante 14. zu Längskante 14 verlaufender Bereiche 21, 22 unterteilt ist, die ausgehend von einem mittleren Bereich 21, der sich in Höhe der horizontalen Ebene befindet durch die der Zentralstrahl 9 verläuft, symmetrisch nach oben und unten aneinander anschließend angeordnet sind.

Wie man der Fig.1 entnimmt, besitzt der mittlere Bereich 21 eine im Vertikalschnitt kreisbogenförmige Innenkontur 24, die zur Leuchtdiode 7 hin konvex ausgebildet ist. Demgegenüber weist jeder sich hieran nach oben bzw. unten anschließende Bereich 22 eine zur Leuchtdiode 7 hin gewendete Innenfläche 25 auf, die zur Vertikalen derart schräg verläuft, daß ihre Kante, die näher bei der durch den Zentralstrahl 9 verlaufenden horizontalen Mittelebene liegt, einen geringeren Abstand von der Außenseite 18 des Elementes 11 besitzt, als ihre von dieser Mittelebene weiter entfernt liegende, horizontal verlaufende Kante. Dadurch entsteht eine sägezahnartige Struktur derart, daß jeder von der horizontalen Mittelebene weiter entfernt liegende Bereich 22 mit seiner näher bei dieser horizontalen Mittelebene liegenden Kante über den näher an der horizontalen Mittelebene liegenden Nachbarbereich 22 zur Leuchtdiode 7 hin vorspringt.

Aufgrund dieser Struktur bildet das optisch wirksame Element 11eine vertikale Sammellinse, die so dimensioniert ist, daß sie den in etwa unter einem vertikalen Winkel von ±60° bezüglich der horizontalen Mittelebene von der Leuchtdiode 7 abgestrahlten Lichtkegel bündelt, so daß er nach dem Hindurchtreten durch das Element 11 einem Lichtkegel mit einem vertikalen Öffnungswinkel von ±10° entspricht. Demgegenüber verändert das Element 11 die Verteilung des von der Leuchtdiode 7 abgestrahlten, durch es hindurchtretenden Lichts in horizontaler Richtung nahezu nicht.

Es tritt lediglich ein gewisser Streueffekt sowohl in horizontaler als auch in vertikaler Richtung auf, durch den das von der Leuchtdiode 7 kommende Licht seitlich über den horizontalen Abstrahlungswinkel von ±90 ° hinaus und insbesondere auch nach oben zurückgeworfen wird. Dies wird in vorteilhafter Weise mit Hilfe der in Fig.3 gezeigten trapezförmigen Aussparungen 27, 27 und 28 genutzt, um einerseits den seitlichen Abstrahlungswinkel zu vergrößern und andererseits einer Person, die auf einem mit einer solchen Schlußleuchte ausgestatteten Fahrrad fährt, beim Zurückblicken eine Funktionskontrolle zu ermöglichen.

Alternativ zu der oben beschriebenen Anordnung des optisch wirksamen Elementes 11 relativ zur Leuchtdiode 7 ist es auch möglich, dieses so zu positionieren, daß der fiktive Brennpunkt vor bzw. hinter der die beiden vertikalen Längskanten 14, 14 miteinander verbindenden Ebene liegt.

Wie man der Fig.1 entnimmt, ist die äußere Lichtscheibe 30 des Gehäuses 1 auf der Innenseite im Bereich der Sammellinse vollkommen glatt und ohne Struktur. Dadurch werden die hier entstehenden Oberflächenreflexionen in horizontale Winkelbereiche > + 90° nutzbringend umgelenkt.

## Patentansprüche

1. Fahrzeugleuchte, insbesondere Fahrradschlußleuchte mit einer Leuchtdiode (7), die so angeordnet ist, daß die zentrale Achse (9) des Raumwinkels, in den sie Licht abstrahlt, im Betrieb in etwa horizontal gerichtet ist, dadurch gekennzeichnet, daß eine Leuchtdiode (7) verwendet wird, die Licht in einen Raumwinkel von etwa ±180° abstrahlt, und daß ein optisch aktives Element (11) vorgesehen ist, das die Winkelverteilung des von der Leuchtdiode (7) in horizontaler Richtung abgestrahlten Lichts im wesentlichen unverändert läßt und das in vertikaler Richtung abgestrahlte Licht jedoch bündelt.

2. Fahrzeugleuchte nach Anspruch 1, dadurch gekennzeichnet, daß das optisch aktive Element (11) eine nur in vertikaler Richtung wirksame Sammellinse ist.

3. Fahrzeugleuchte nach Anspruch 1 oder 2, dadurch gekennzeichnet, daß die Sammellinse im wesentlichen die Form eines halben Kreiszylinders besitzt, der so angeordnet ist, daß seine Achse vertikal verläuft und seine konkave Seite (19) der Leuchtdiode (7) zugewandt ist.

4. Fahrzeugleuchte nach Anspruch 3, dadurch gekennzeichnet, daß der fiktive Brennpunkt (16) der Leuchtdiode (7) in der Ebene liegt, die von den beiden in axialer Richtung verlaufenden Längskanten (14, 14) des Halbzylinders aufgespannt ist.

5. Fahrzeugleuchte nach Anspruch 3 oder 4, dadurch gekennzeichnet, daß die Höhe des Halbzylinders so gewählt ist, daß das von der Leuchtdiode (7) in vertikaler Richtung in einen Winkelbereich von etwa ±60° bezüglich der zentralen Achse (9) abgestrahlte Licht erfaßt und gebündelt wird.

6. Fahrzeugleuchte nach einem der Ansprüche 3 bis 5, dadurch gekennzeichnet, daß der Halbzylinder auf seiner konvexen Außenseite (18) eine glatte Zylinderfläche aufweist, während seine der Leuchtdiode (7) zugewandte, konkave Innenseite (19) in vertikal übereinander angeordnete, in der Draufsicht jeweils halbkreisförmige Bereiche (21, 22)unterteilt ist, von denen der zentrale Bereich (21), der in etwa auf der zentralen Achse (9) des von der Leuchtdiode (7) abgestrahlten Lichtbündels liegt, eine im Vertikalschnitt kreisbogenförmige, zur Leuchtdiode (7) hin konvexe Innenkontur (24) besitzt, während die übrigen Bereiche (22) jeweils eine im Vertikalschnitt ebene Innenfläche (25) aufweisen, die zur Senkrechten so geneigt ist, daß sie über die Innenfläche (25) des benachbarten, näher zur zentralen Achse (9) hin angeordneten Bereiches (22) sägezahnförmig zur Leuchtdiode (7) hin vorspringt.

7. Fahrzeugleuchte nach einem der vorhergehenden Ansprüche, dadurch gekennzeichnet, daß die Leuchtdiode (7) auf einer Leiterplatte (5) angeordnet ist, die links und rechts von der Leuchtdiode (7) trapezförmige Aussparungen (27, 27) aufweist, die sich zur Außenkante der Leiterplatte (5) hin erweitern.

8. Fahrzeugleuchte nach Anspruch 7, dadurch gekennzeichnet, daß die Leiterplatte (5) oberhalb der Leuchtdiode (7) eine trapezförmige Aussparung (28) aufweist, die sich zur Außenkante der Leiterplatte (5) hin erweitert.

9. Fahrzeugleuchte mit einer äußeren Lichtscheibe (30) nach einem der vorhergehenden Ansprüche, dadurch gekennzeichnet, daß die äußere Lichtscheibe (30) im Bereich des optisch aktiven Elementes (11) innen vollkommen glatt und ohne Struktur ist.
